# EUROPEAN PATENT SPECIFICATION

(11) **EP 2 130 933 B1**
(45) Date of publication and mention of the grant of the patent: **25.05.2016**
(21) Application number: 08739215.5
(22) Date of filing: 28.03.2008
(51) Int. Cl.: C22C 19/07, C23C 4/06, C23C 4/12, C23C 4/18, F01D 5/22, F01D 5/28, F01D 25/00, F02C 7/00

(54) **COATING MATERIAL, METHOD FOR PRODUCTION THEREOF, COATING METHOD, ROTOR BLADE EQUIPPED WITH SHROUD**
BESCHICHTUNGSMATERIAL, VERFAHREN ZU SEINER HERSTELLUNG, BESCHICHTUNGSVERFAHREN UND MIT EINER HÜLLE VERSEHENES ROTORBLATT
MATIÈRE DE REVÊTEMENT, SON PROCÉDÉ DE FABRICATION, PROCÉDÉ DE REVÊTEMENT, PALE DE ROTOR ÉQUIPÉE D'UN REVÊTEMENT DE PROTECTION

(30) Priority: 29.03.2007 JP 2007088697
(43) Date of publication of application: 09.12.2009
(73) Proprietor: Mitsubishi Hitachi Power Systems, Ltd., Yokohama-shi, Kanagawa 220-8401 (JP); Tsinghua University, Beijing 100084 (CN)
(72) Inventor: TORIGOE, Taiji, Takasago-shi Hyogo 676-8686 (JP); YUNOMURA, Tomoaki, Takasago-shi Hyogo 676-8686 (JP); OKADA, Ikuo, Takasago-shi Hyogo 676-8686 (JP); YANG, Zhi-Gang, Beijing 100084 (CN)
(74) Representative: Henkel, Breuer & Partner
(86) International application number: PCT/JP2008/056097
(87) International publication number: WO 2008/123418

(56) References cited:
- EP-A2- 1 563 937
- WO-A1-2004/009860
- GB-A- 1 331 007
- JP-A- 4 254 542
- JP-A- 4 254 543
- JP-A- 7 278 780
- JP-A- 04 254 542
- JP-A- 04 503 377
- JP-A- 09 316 622
- JP-A- 2001 152 803
- JP-A- 2003 183 754
- JP-A- 2005 533 186
- JP-A- 2008 088 497
- US-A- 3 839 024
- US-A- 6 004 372
- US-A1- 2003 211 004
- US-A1- 2005 142 026
- US-A1- 2005 276 687
- US-A1- 2006 134 454

## Description

### Technical Field

The present invention relates to a coating material, a method of manufacturing the coating material, a coating method, and a moving blade fitted with a shroud.

### Background Art

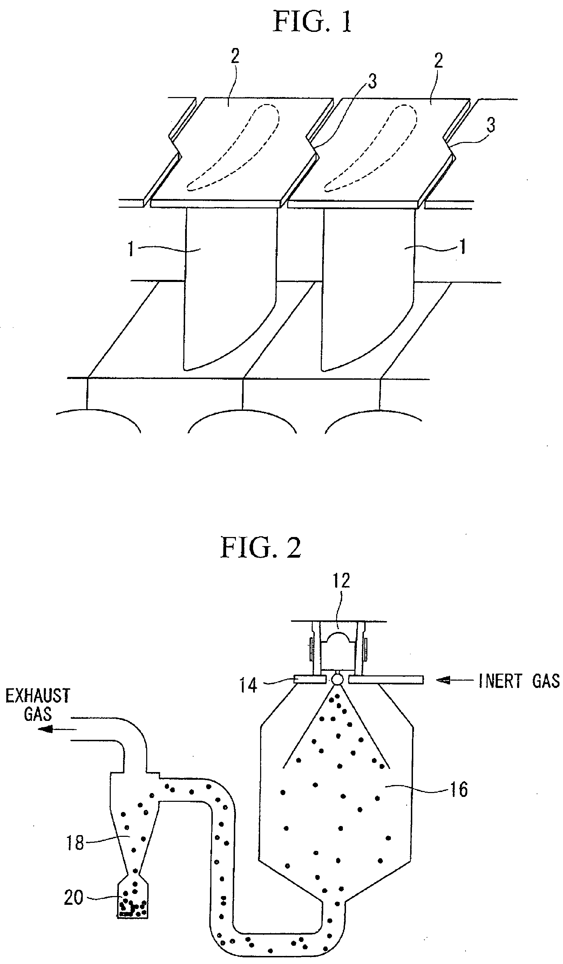

FIG. 1 is a partial perspective view illustrating a moving blade fitted with a shroud. At the tip of this moving blade 1, a Z-type shroud 2 is formed that prevents fluid leakage and restrains torsion of the moving blade 1, and the shroud 2 has a contact surface 3 that contacts the shroud 2 of the adjacent moving blade 1. Furthermore, because the moving blade 1 is affected by various types of vibration caused by factors such as drift, nozzle passing of the stationary blade, and flutter, the contact surface 3 of the shroud 2 is typically subjected to an abrasion resistance treatment, conventionally by applying a coating film of Tribaloy 800 (T-800: a cobalt-based abrasion resistance material) by an APS (Atmospheric Plasma Spraying) process.

However, with APS, a problem arises in that the coating film exhibits poor adhesion with the base material at the contact surface 3 of the shroud 2, meaning the coating film tends to be prone to peeling. Accordingly, Patent Citation 1 discloses a coating method in which the Tribaloy coating film is formed on a shroud contact surface 3 of a turbine moving blade 1 by High Velocity Oxy-Fuel (HVOF) spraying, Low Pressure Plasma Spraying (LPPS) or atmospheric plasma spraying, and is then subjected to a diffusion heat treatment.

Patent Citation 1:
Japanese Unexamined Patent Application, Publication No. 2001-152803

JP4-254542A discloses a cobalt based alloy having a composition consisting of 15 - 20 wt.-% Cr, 25 - 32 wt.-% Mo, 0.3 - 1.9 wt.-% Si, not more than 0.2 wt.-% C, not more than 2 wt.-% Fe, not more than 2 wt.-% Ni, and the balance being cobalt. The cobalt based alloy is excellent in corrosion resistance, wear resistance and toughness.

### Disclosure of Invention

However, although the T-800 coating film has excellent ductility and high abrasion resistance, in the high-temperature gas turbines of recent years, the metal temperature at the tips of the three-stage moving blades reaches 750°C or higher, causing significant oxidative loss and a deterioration in the function of the abrasion-resistant coating film.

The present invention has been developed in light of the above circumstances, and has an object of providing a coating material, a method of manufacturing the coating material, and a coating method using the coating material that are capable of forming a coating film that retains high abrasion resistance while offering improved oxidation resistance at high temperatures, as well as providing a moving blade fitted with a shroud.

In order to achieve the above object, the present invention provides the following aspects.

In other words, the present invention provides a coating material, consisting of not less than 14% by mass and not more than 30% by mass of molybdenum (Mo), not less than 13% by mass and not more than 20% by mass of chromium (Cr), not less than 0.5% by mass and not more than 4% by mass of silicon at least one added component selected from the group consisting of not less than 0.01% by mass and not more than 3% by mass of yttrium (Y), and not less than 0.01% by mass and not more than 10% by mass of aluminium (Al) (Si), which may further comprise not more than 1.5% by mass of nickel (Ni), not less than 0.1% by mass and not more than 10% by mass of iron (Fe), and not more than 0.08% by mass of carbon (C), and the balance being cobalt (Co) and unavoidable impurities.

The coating material of the present invention is used for depositing a coating film that achieves a combination of high abrasion resistance, and high oxidation resistance at high temperatures.

In the coating material of the present invention, the added component may be not less than 0.01% by mass and not more than 3% by mass of Y.

By adding Y, as described below, the oxidation resistance of the coating film can be improved.

In the coating material of the present invention, the added component may be not less than 0.01% by mass and not more than 10% by mass of Al.

By adding Al, as described below, the oxidation resistance of the coating film at high temperatures can be improved.

The coating material of the present invention may further comprise not less than 0.1% by mass and not more than 10% by mass of Fe.

By adding Fe, as described below, the oxidation resistance of the coating film at high temperatures can be improved.

In the coating material of the present invention, the added component may be not less than 0.01% by mass and not more than 10% by mass of Al, and the coating material may further comprise not less than 0.1% by mass and not more than 10% by mass of Fe.

In this case, by adding predetermined quantities of both Al and Fe, the oxidation resistance of the coating film at high temperatures can be further improved.

In the coating material of the present invention, the added component may be not less than 0.01% by mass and not more than 10% by mass of Al, and not less than 0.01% by mass and not more than 3% by mass of Y.

In this case, by adding predetermined quantities of both Al and Y, the oxidation resistance of the coating film at high temperatures can be further improved.

In the coating material of the present invention, the added component may be not less than 0.01% by mass and not more than 10% by mass of Al, and not less than 0.01% by mass and not more than 3% by mass of Y, and the coating material further comprises not less than 0.1% by mass and not more than 10% by mass of Fe.

In this case, by adding predetermined quantities of the three components Al, Fe, and Y, the oxidation resistance of the coating film at high temperatures can be improved even further.

In a coating method according to the present invention, a coating film is formed on a substrate surface by high-velocity flame spraying, using a spray powder composed of any of the coating materials described above, with a particle size distribution of not more than 53 µm.

The coating method of the present invention can be used to deposit a dense coating film that provides a combination of high abrasion resistance and high oxidation resistance at high temperatures.

Furthermore, in another coating method according to the present invention, a coating film is formed on a substrate surface by low pressure plasma spraying using a spray powder with a particle size distribution of not less than 10µm and not more than 44µm or atmospheric plasma spraying, using a spray powder with a particle size distribution of not morethan 103 µm and composed of any of the coating materials described above.

This coating method can be used to deposit a dense coating film that provides a combination of high abrasion resistance and high oxidation resistance at high temperatures.

In either of the above coating methods, a diffusion heat treatment is preferably performed after the coating film is formed.

In this case, the film quality of the coating film is enhanced, and the adhesion between the coating film and the base material is further improved.

In a moving blade fitted with a shroud according to the present invention, a shroud is provided at the tip of a moving blade of a turbine, wherein the shroud comprises a contact surface that contacts another shroud provided at a tip of an adjacently positioned moving blade when the moving blade is in use, and this contact surface comprises a coating film composed of any of the coating materials described above.

Because the moving blade fitted with a shroud of the present invention has a dense coating film at the contact surface that provides a combination of high abrasion resistance and high oxidation resistance at high temperatures, the contact surface of the shroud suffers little oxidative loss, and has a long lifespan.

A description of the reasoning for restricting the quantity of each added component in the composition of the coating material according to the present invention is presented below. In the following description, unless otherwise specified, the quantity of each component is expressed as a percentage by mass in which the total mass of all the components is deemed to be 100.

In a coating film formed using the coating material of the present invention, Y has a so-called pegging effect that prevents generated oxide scales from flaking off, and therefore improves the oxidation resistance of the coating film. This effect is not realized if the added quantity of Y is less than 0.01% by mass, whereas if the quantity exceeds 3%, then significant segregation occurs within the coating film, adversely affecting the mechanical characteristics of the coating film such as the ductility. The added quantity of Y is preferably not less than 0.1% and not more than 2%, and is most preferably not less than 0.3% and not more than 1.0%.

In a coating film formed using the coating material of the present invention, Al contributes to improved stability of the Cr₂O₃ that acts as the protective oxide film, thereby improving the oxidation resistance of the coating film. This effect of enhancing the oxidation resistance of the coating film is not realized if the added quantity of aluminum is less than 0.01%, whereas if the quantity exceeds 10%, then although the oxidation resistance and abrasion resistance of the coating film improve, the resulting coating film is extremely hard and tends to crack more easily. The added quantity of Al is preferably not less than 1% and not more than 7%, and is most preferably not less than 3% and not more than 5%.

Experiments show that Fe improves the oxidation resistance of a coating film formed using the coating material of the present invention. The improved oxidation resistance of the coating film is thought to be due to Co and Fe forming a solid solution, thereby reducing the proportion of Mo, which has poor oxidation resistance. This effect of enhancing the oxidation resistance of the coating film is not realized when the quantity of Fe is less than 0.1%, whereas if the quantity exceeds 10%, then although the oxidation resistance of the coating film improves, the abrasion resistance of the coating film tends to decrease. The quantity of Fe is preferably not less than 1% and not more than 7%, and is most preferably not less than 3% and not more than 5%.

The present invention is able to provide a coating material, a method of manufacturing the coating material and a coating method using the coating material that are capable of forming a coating film that retains high abrasion resistance while offering improved oxidation resistance at high temperatures, as well as a moving blade fitted with a shroud.

Because the coating film obtained using the present invention can, for example, withstand continuous use at 850°C, the life of the contact surface, which is approximately 2 years when the coating surface is formed by depositing T-800, can be extended significantly to three years or longer, particularly in those cases where the coating film is used on the contact surfaces of the shroud of a three-stage moving blade in a high-temperature gas turbine.

### Brief Description of Drawings

[FIG. 1] A partial perspective view illustrating a moving blade fitted with a shroud.
[FIG. 2] A schematic cross-sectional view of a device used in a gas atomization method.
[FIG. 3] A graph illustrating the results of oxidation tests performed on coating films according to examples and a comparative example.
[FIG. 4] A graph illustrating the hardness on the Rockwell C scale of coating films according to the examples and the comparative example.

### Explanation of Reference:

1: Moving blade
2: Shroud
3: Contact surface

### Best Mode for Carrying Out the Invention

Embodiments of the present invention are described below with reference to the drawings.

### First Embodiment

A coating material, a method of manufacturing the coating material, a coating method, and a moving blade fitted with a shroud according to a first embodiment of the present invention are described below in detail by way of examples with reference to the drawings. However, the present invention is in no way limited by the examples presented below.

### (Example 1 to Example 7)

Spray powders with the compositions of examples 1 to 7 shown in Table 1 were prepared by a gas atomization method using the device shown in FIG. 2.

A predetermined alloy component was superheated and melted inside a levitation furnace 12, and the molten matter was then drained through a nozzle hole of a spray nozzle 14 provided at the base of the tundish to create a thin flow of molten matter. An inert jet fluid (typically helium gas or the like) was blown onto the flow of molten matter from a position around the periphery of the flow, and the energy of this jet fluid caused the molten matter to flow downward into a spray chamber 16. The downward flow of molten matter was broken up into liquid droplets, which were solidified as they fell to produce an alloy powder. The alloy powder was separated from the exhaust gas by a cyclone 18 provided on the downstream side of the device, and was then collected in a powder collection vessel 20 provided beneath the cyclone.

Because the gas-atomized alloy powder produced in this manner is obtained by instantaneously atomizing and cooling a liquid of a uniformly molten alloy, a uniform microstructure is obtained. Furthermore, because droplets are continuously produced from the same molten matter, there is very little difference in composition between particles, and this difference in composition is minimal for both large and small particles. The gas atomization method produces a spherical powder.

A sieve was used to obtain a particle size distribution of the spray powder of not more than 53 µm.

Next I a description of the coating method with reference to FIG. 1. Using the spray powder described above as the coating material, a high velocity oxy-fuel (HVOF) process was used to deposit a coating film on a side surface that functions as the contact surface 3 of the shroud 2, which comprises IN738LC as the base material. In the description below, for the sake of convenience, the side surface of the shroud 2 that is to function as the contact surface 3 is referred to as the "contact surface" regardless of whether or not the coating film has been formed.

The spray powder was supplied in a powdered state to a spray gun, melted by heating to a relatively low temperature (not higher than 1600°C) by combusting oxygen and kerosene, and then sprayed at a high velocity (300 m/s or faster) onto the contact surface 3, thereby forming a coating film on the contact surface 3. The flame velocity of the HVOF process is within a range from 300 m/s to 500 m/s at its slowest, and by this enables a dense coating film to be deposited by the spray material striking the contact surface 3. The film thickness of the coating film was approximately 0.2 mm.

The specific HOVF spraying conditions (for a JP5000 system manufactured by Hobart Tafa Technologies) used in the present embodiment were as follows:
Firing pressure: 0.7 MPa
Kerosene flow rate: 20 L/h
Oxygen flow rate: 54 m³/h
Spray distance: 500 mm
Gun movement speed: 500 mm/sec.
Gun movement pitch: 6 mm
Spray device used: JP5000 manufactured by Praxair, Inc.

HVOF is conducted in the open atmosphere, and is therefore an advantageous deposition method due to factors such as its low cost and applicability to large components.

Because coating films formed by HVOF have few pores, and because little oxide formation occurs at the grain boundaries of the coating film due to oxidation being inhibited by the low spraying temperature, a diffusion heat treatment was performed in a vacuum furnace after film deposition in order to improve the film quality. This heat treatment may be performed, for example, by first performing solution heat treatment at 1121°C for 2.5 hours, subsequently cooling the coating film in nitrogen, and then performing an aging heat treatment at 850°C for 24 hours, followed by cooling in nitrogen. This heat treatment may be combined with a heat treatment of the base material.

This diffusion heat treatment can be performed as part of the heat treatment applied to the moving blade 1 itself. By conducting spraying using HVOF and then performing a diffusion heat treatment in the manner described above, the various structural moieties within the film derived from the base material, the coating film and the spray powder undergo diffusion and integration, enabling a coating film to be obtained that offers excellent adhesion to the base material of the contact surface 3 and does not peel easily.

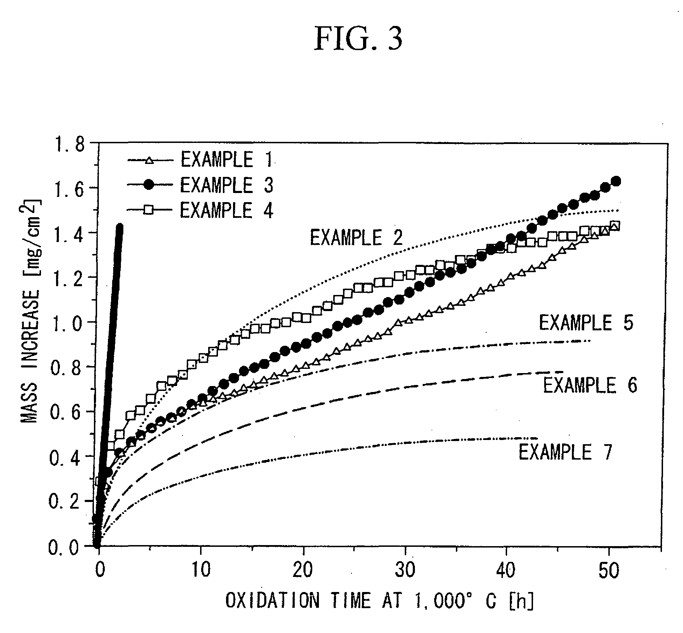

FIG. 3 shows the results of isothermal oxidation tests of the coating film performed at 1000°C. The isothermal oxidation tests were performed using a High Temperature Thermogravimeter TG 96 manufactured by Setaram Inc., by placing the samples in argon gas (flow rate: 1 L/hr), raising the temperature by 5°C/min. until the target temperature was reached, and then replacing the gas with dry air (at the same flow rate) while continuously measuring the mass change caused by oxidation. In all the examples, oxidation resistance was greatly enhanced when compared with that of comparative example 1 described below, which used T-800 as the coating material. In comparative example 1, the mass had increased by 14 mg/cm² after 50 hours of oxidation time at 1,000°C, whereas in each of the examples, oxidation was reduced to 1/10th of this amount or less.

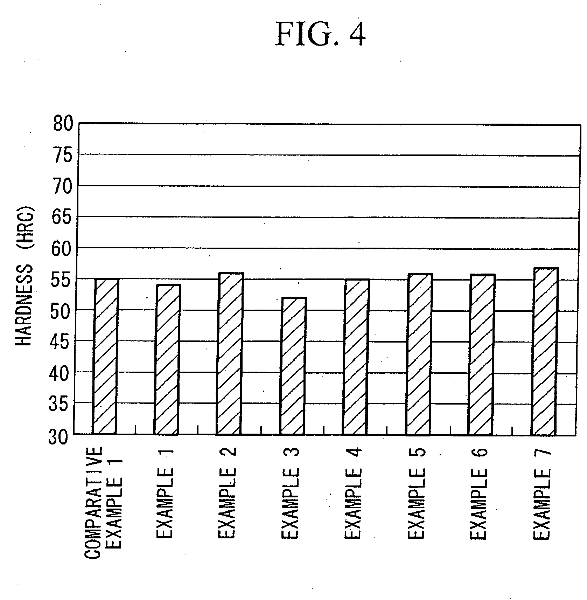

FIG. 4 shows the hardness of the coating films on the Rockwell C scale. It is clear from the results that in all of the examples, the hardness of the coating film was retained when compared with that of comparative example 1 described below in which T-800 was used as the coating material.

From the results shown in FIG. 3 and FIG. 4, it is apparent that by using the coating materials of examples 1, 2, 4 through 7, a coating film for a shroud contact surface can be obtained that has superior resistance to high-temperature oxidizing environments and a longer usable lifespan than conventional coatings.

### (Comparative Example 1)

Using a spray powder (T-800) having the composition of comparative example 1 shown in Table 1, a coating film was deposited on the contact surface 3 of the shroud 2 using the same method as that described for example 1.

FIG. 3 shows the results of an oxidation test of the coating film performed at 1000°C. The results show that the coating film deposited using the T-800 spray powder had poor oxidation resistance at high temperatures.

FIG. 4 shows the hardness of the coating film on the Rockwell C scale.

**[Table 1]**

| | Co | Mo | Cr | Si | Y | Al | Fe |
|---|---|---|---|---|---|---|---|
| Example 1 | Bal. | 28.5 | 17.5 | 3.4 | 0.5 | - | - |
| Example 2 | Bal. | 28.5 | 17.5 | 3.4 | - | 5 | - |
| Example 3* | Bal. | 28.5 | 17.5 | 3.4 | - | - | 5 |
| Example 4 | Bal. | 28.5 | 17.5 | 3.4 | - | 5 | 5 |
| Example 5 | Bal. | 28.5 | 17.5 | 3.4 | 0.5 | 2 | - |
| Example 6 | Bal. | 28.5 | 17.5 | 3.4 | 0.5 | 5 | - |
| Example 7 | Bal. | 28.5 | 17.5 | 3.4 | 0.5 | 5 | 5 |
| Comparative Example 1 | Bal. | 28.5 | 17.5 | 3.4 | - | - | - |

| | | | | | | | |
|---|---|---|---|---|---|---|---|
| *not within the scope of the present invention | | | | | | | |

### Second Embodiment

Deposition of the coating film may be performed using a HVAF (High Velocity Air Fuel) process instead of the HVOF process. In this case, a dense coating film with minimal oxides can be obtained. This improves the adhesion between the coating film on the contact surface 3 and the base material.

### Third Embodiment

Deposition of the coating film may be performed by a low pressure plasma spraying (LPPS) process instead of the HVOF process. As the plasma working gas, argon or a mixed gas of argon and nitrogen or the like may be used.

Table 2 shows an example under LPPS spray conditions (using a low-pressure spraying system manufactured by Sulzer Metco Ltd.). The term "Clearing" in Table 2 refers to using a reversed polarity arc discharge to dislodge deposits from the surface of the target object.

**[Table 2]**

| | Clearing | Preheating | Plasma spraying |
|---|---|---|---|
| Internal chamber pressure (Pa) | 3000-4000 | 400-5500 | 5500-6500 |
| Ar/H2 flow rate (1/min) | 50-500 | 45-55/7-9 | 40-50/8-10 |
| Current/Voltage (A/V) | 490-510/58-62 | 590-610/60-65 | 670-700/62-67 |
| Carrier gas (Ar) flow rate (1/min) | - | 1.8-2.0 | 1.8-2.0 |
| Spray distance (mm) | 250-275 | 290-320 | 270-280 |

Because no oxide formation occurs in a film sprayed under reduced pressure, the resulting film is dense and has excellent adhesion to the base material. In addition, by performing a diffusion heat treatment to enhance the film quality, adhesion is improved even further. As the LPPS spray powder, a powder with a particle size distribution of not less than 10 µm and not more than 44 µm can be used.

Atmospheric plasma spraying may be used instead of low pressure plasma spraying.

### Fourth Embodiment

Deposition of the coating film may be performed using an atmospheric plasma spraying (APS) process instead of the HVOF process. As the APS spray powder, a powder with a particle size distribution of not more than 103 µm can be used.

Examples have been described above in which the coating material of the present invention is used to form a coating film on a contact surface of a shroud within a moving blade fitted with a shroud, but the present invention is not limited to such examples, and the coating film may also be applied to a turbine member having friction components that are exposed to high-temperature gases. The coating material of the present invention is also useful for forming a coating film on a seal pin or the like.

## Claims

1. A coating material, consisting of:
not less than 14% by mass and not more than 30% by mass of Mo,
not less than 13% by mass and not more than 20% by mass of Cr, and
not less than 0.5% by mass and not more than 4% by mass of si, at least one added component selected from the group consisting of: not less than 0.01% by mass and not more than 3% by mass of Y, and not less than 0.01% by mass and not more than 10% by mass of Al,
which may further comprise:
not more than 1.5% by mass of Ni,
not less than 0.1% by mass and not more than 10% by mass of Fe, and
not more than 0.08% by mass of C,
and the balance being Co and unavoidable impurities.

2. The coating material according to Claim 1, wherein the added component is not less than 0.01% by mass and not more than 3% by mass of Y.

3. The coating material according to Claim 1, wherein the added component is not less than 0.01% by mass and not more than 10% by mass of Al.

4. The coating material according to Claim 1, comprising not less than 0.1% by mass and not more than 10% by mass of Fe.

5. The coating material according to Claim 1, wherein the added component is composed of:
not less than 0.01% by mass and not more than 10% by mass of Al, and
the coating material further comprises not less than 0.1% by mass and not more than 10% by mass of Fe.

6. The coating material according to Claim 1, wherein the added component is composed of:
not less than 0.01% by mass and not more than 10% by mass of Al, and
not less than 0.01% by mass and not more than 3% by mass of Y.

7. The coating material according to Claim 1, wherein the added component is composed of:
not less than 0.01% by mass and not more than 10% by mass of Al, and
not less than 0.01% by mass and not more than 3% by mass of Y, and
the coating material further comprises not less than 0.1% by mass and not more than 10% by mass of Fe.

8. A coating method, comprising forming a coating film on a substrate surface by high-velocity flame spraying, using a spray powder with a particle size distribution of not more than 53 *µ*m and composed of the coating material according to any one of Claim 1 to Claim 7.

9. A coating method, comprising forming a coating film on a substrate surface by low pressure plasma spraying, using a spray powder with a particle size distribution of not less than 10 *µ*m and not more than 44 *µ*m and composed of the coating material according to any one of Claim 1 to Claim 7, or atmospheric plasma spraying, using a spray powder with a particle size distribution of not more than 103 *µ*m and composed of the coating material according to any one of Claim 1 to Claim 7.

10. The coating method according to Claim 8 or Claim 9, wherein a diffusion heat treatment is performed after forming the coating film.

11. A moving blade fitted with a shroud in which a shroud is provided at a tip of a turbine moving blade, wherein
the shroud comprises a contact surface that contacts another shroud provided at a tip of an adjacently positioned moving blade when the blade is in use, and
the contact surface comprises a coating film composed of the coating material according to any one of Claim 1 to Claim 7.

## Patentansprüche

1. Beschichtungsmaterial, bestehend aus:
nicht weniger als 14 Masse-% und nicht mehr als 30 Masse-% an Mo,
nicht weniger als 13 Masse-% und nicht mehr als 20 Masse-% an Cr, und
nicht weniger als 0.5 Masse-% und nicht mehr als 4 Masse-% an Si,
zumindest einer zusätzlichen Komponente ausgewählt aus der Gruppe bestehend aus:
nicht weniger als 0.01 Masse-% und nicht mehr als 3 Masse-% an Y, und
nicht weniger als 0.01 Masse-% und nicht mehr als 10 Masse-% an Al,
welches weiterhin umfassen kann:
nicht mehr als 1.5 Masse-% an Ni,
nicht weniger als 0.1 Masse-% und nicht mehr als 10 Masse-% an Fe, und
nicht mehr als 0.08 Masse-% an C, und
wobei der Rest Co und unvermeidbare Verunreinigungen sind.

2. Beschichtungsmaterial nach Anspruch 1, wobei die zusätzliche Komponente nicht weniger als 0.01 Masse-% und nicht mehr als 3 Masse-% an Y ist.

3. Beschichtungsmaterial nach Anspruch 1, wobei die zusätzliche Komponente nicht weniger als 0.01 Masse-% und nicht mehr als 10 Masse-% an Al ist.

4. Beschichtungsmaterial nach Anspruch 1, umfassend nicht weniger als 0.1 Masse-% und nicht mehr als 10 Masse-% an Fe.

5. Beschichtungsmaterial nach Anspruch 1, wobei die zusätzliche Komponente gebildet ist aus:
nicht weniger als 0.01 Masse-% und nicht mehr als 10 Masse% an Al, und
wobei das Beschichtungsmaterial weiterhin nicht weniger als 0.1 Masse-% und nicht mehr als 10 Masse-% an Fe umfasst.

6. Beschichtungsmaterial nach Anspruch 1, wobei die zusätzliche Komponente gebildet ist aus:
nicht weniger als 0.01 Masse-% und nicht mehr als 10 Masse% an Al, und
nicht weniger als 0.01 Masse-% und nicht mehr als 3 Masse-% an Y.

7. Beschichtungsmaterial nach Anspruch 1, wobei die zusätzliche Komponente gebildet ist aus:
nicht weniger als 0.01 Masse-% und nicht mehr als 10 Masse% an Al, und
nicht weniger als 0.01 Masse-% und nicht mehr als 3 Masse-% an Y, und
wobei das Beschichtungsmaterial weiterhin nicht weniger als 0.1 Masse-% und nicht mehr als 10 Masse-% an Fe umfasst.

8. Beschichtungsverfahren, umfassend das Ausbilden eines Beschichtungsfilms auf einer Substratoberfläche durch Hochgeschwindigkeit-Flammspritzen unter Verwendung eines Spritzpulvers, welches eine Partikelgrößenverteilung von nicht mehr als 53 µm aufweist und aus dem Beschichtungsmaterial nach einem der Ansprüche 1 bis 7 gebildet ist.

9. Beschichtungsverfahren, umfassend das Ausbilden eines Beschichtungsfilms auf einer Substratoberfläche durch Niederdruck-Plasmaspritzen unter Verwendung eines Spritzpulvers, welches eine Partikelgrößenverteilung von nicht weniger als 10 µm und nicht mehr als 44 µm aufweist und aus dem Beschichtungsmaterial nach einem der Ansprüche 1 bis 7 gebildet ist, oder durch atmosphärisches Plasmaspritzen unter Verwendung eines Spritzpulvers, welches eine Partikelgrößenverteilung von nicht mehr als 103 µm aufweist und aus dem Beschichtungsmaterial nach einem der Ansprüche 1 bis 7 gebildet ist.

10. Beschichtungsverfahren nach Anspruch 8 oder Anspruch 9, wobei nach der Ausbildung des Beschichtungsfilms eine Diffusionswärmebehandlung durchgeführt wird.

11. Laufschaufel, welche mit einer Abdeckung versehen ist, wobei eine Abdeckung an einem Außenende einer Turbinenlaufschaufel bereitgestellt ist, wobei
die Abdeckung eine Kontaktoberfläche umfasst, welche beim Betrieb der Schaufel eine andere Abdeckung, die an einem Außenende einer benachbarten Laufschaufel bereitgestellt ist, berührt, und
die Kontaktoberfläche einen Beschichtungsfilm umfasst, welcher aus dem Beschichtungsmaterial nach einem der Ansprüche 1 bis 7 gebildet ist.

## Revendications

1. Matériau de revêtement, constitué de :
pas moins de 14 % en masse et pas plus de 30 % en masse de Mo,
pas moins de 13 % en masse et pas plus de 20 % en masse de Cr, et
pas moins de 0,5 % en masse et pas plus de 4 % en masse de Si,
au moins un composant ajouté choisi dans le groupe constitué de :
pas moins de 0,01 % en masse et pas plus de 3 % en masse d'Y, et
pas moins de 0,01 % en masse et pas plus de 10 % en masse d'Al,
qui peut en outre comprendre :
pas plus de 1,5 % en masse de Ni,
pas moins de 0,1 % en masse et pas plus de 10 % en masse de Fe, et
pas plus de 0,08 % en masse de C, et
le reste étant du Co et des impuretés inévitables.

2. Matériau de revêtement selon la revendication 1, dans lequel le composant ajouté n'est pas inférieur à 0,01 % en masse et pas supérieur à 3 % en masse d'Y.

3. Matériau de revêtement selon la revendication 1, dans lequel le composant ajouté n'est pas inférieur à 0,01 % en masse et pas supérieur à 10 % en masse d'Al.

4. Matériau de revêtement selon la revendication 1, comprenant pas moins de 0,1 % en masse et pas plus de 10 % en masse de Fe.

5. Matériau de revêtement selon la revendication 1, dans lequel le composant ajouté est composé de :
pas moins de 0,01 % en masse et pas plus de 10 % en masse d'Al, et
le matériau de revêtement comprend en outre pas moins de 0,1 % en masse et pas plus de 10 % en masse de Fe.

6. Matériau de revêtement selon la revendication 1, dans lequel le composant ajouté est composé de :
pas moins de 0,01 % en masse et pas plus de 10 % en masse d'Al, et
pas moins de 0,01 % en masse et pas plus de 3 % en masse d'Y.

7. Matériau de revêtement selon la revendication 1, dans lequel le composant ajouté est composé de :
pas moins de 0,01 % en masse et pas plus de 10 % en masse d'Al, et
pas moins de 0,01 % en masse et pas plus de 3 % en masse d'Y, et
le matériau de revêtement comprend en outre pas moins de 0,1 % en masse et pas plus de 10 % en masse de Fe.

8. Procédé de revêtement, comprenant la formation d'un film de revêtement sur une surface de substrat par projection à la flamme à grande vitesse, à l'aide d'une poudre de pulvérisation avec une distribution de taille de particules non supérieure à 53 µm et composée du matériau de revêtement selon l'une quelconque de la revendication 1 à la revendication 7.

9. Procédé de revêtement, comprenant la formation d'un film de revêtement sur une surface de substrat par projection plasma sous basse pression, à l'aide d'une poudre de pulvérisation avec une distribution de taille de particules non inférieure à 10 µm et non supérieure à 44 µm et composée du matériau de revêtement selon l'une quelconque de la revendication 1 à la revendication 7, ou par projection plasma atmosphérique, à l'aide d'une poudre de pulvérisation avec une distribution de taille de particules non supérieure à 103 µm et composée du matériau de revêtement selon l'une quelconque de la revendication 1 à la revendication 7.

10. Procédé de revêtement selon la revendication 8 ou la revendication 9, dans lequel un traitement thermique de diffusion est réalisé après formation du film de revêtement.

11. Aube mobile équipée d'une enveloppe dans laquelle une enveloppe est prévue au niveau d'un bout d'une aube mobile de turbine, dans laquelle
l'enveloppe comprend une surface de contact qui entre en contact avec une autre enveloppe prévue au niveau d'un bout d'une aube mobile positionnée de façon adjacente lorsque l'aube est en utilisation, et
la surface de contact comprend un film de revêtement composé du matériau de revêtement selon l'une quelconque de la revendication 1 à la revendication 7.
